# EUROPEAN PATENT APPLICATION

(11) **EP 2 366 282 A1**
(43) Date of publication of application: **21.09.2011**
(21) Application number: 10002741.6
(22) Date of filing: 16.03.2010
(51) Int. Cl.: A01K 1/01

(54) **Container for transporting pet litter from a pet litter box to a waste bin and a method for cleaning a pet litter box**

(71) Applicant: Littklin, 6412 DK Heerlen (NL)
(72) Inventor: The designation of the inventor has not yet been filed
(74) Representative: Renkema, Jaap

(57) **Abstract**

The present invention relates to a container (1) for transporting pet litter from a pet litter box (50) to a waste bin (51), the container comprising at least one wall member (2), a bottom member (3) and a handle (4), the handle being arranged and operatively connected to the at least one wall member, the volume of the container being between 0.5 and 5 dm³. The present invention also relates to an assembly comprising such a container and a scoop and a method for cleaning a pet litter box by using such a container.

## Description

The present invention relates to a container for transporting pet litter from a pet litter box to a waste bin.

### BACKGROUND

Temporary pet waste receptacles (i.e. containers) are known in the art, for example from US5551569. Herein it is disclosed that the animal waste is being contained in a closed and sealed chamber.

It Is a disadvantage of such temporary pet waste receptacles that in order keep the odor away the receptacle should be properly sealed and the used pet litter must be packaged In plastic bags. The waste bags containing used pet litter are eventually thrown away. Nowadays biodegradable pet litter is available which may be disposed of in a blo-waste bin, i.e. a waste bin for disposing of biodegradable waste. However, when the waste, in this case pet litter, is packaged in plastic bags, it cannot be disposed of in a bio-waste bin without removing the plastic bags. Removing the plastic bags may, in case of pet litter waste, lead to unhyglenic situations.

It is an object of the present invention to provide a container for cleaning a pet litter box on a regular, e.g. daily, basis in an easy, convenient and hygienic way.

This object is achieved by providing a container for transporting pet litter from a pet litter box to a waste bin, the container comprising at least one wall member, a bottom member and a handle, the handle being arranged and operatively connected to the at least one wall member, the volume of the container being between 0.5 and 5 dm³.

### SUMMARY OF THE INVENTION

Such a container Is compact, and can be held in one hand, while the other hand is free to scoop up the daily waste out of the pet litter box. The user does not have to touch the used pet litter. When the user has finished scooping up the dally waste, he or she may easily empty the container at once Into a larger waste bin, preferably a bio-waste bin, which may or may not be in the vicinity of the pet litter box. Therefore the container is easy to use for cleaning a pet litter box in a convenient and hygienic way.

### DETAILED DESCRIPTION

In an embodiment the volume of the container is preferably between 1 and 3 dm³, more preferably between 1.5 and 2.5 dm³.

In an embodiment, the container according to the present invention comprises four wall members connected each other and to the bottom member. The bottom member is of a rectangular shape having a long side with length d_{long} and a short side with length dₛₕₒᵣₜ ; the surface area of the bottom member being A_{bottom}=d_{long} x dₛₕₒᵣₜ; and wherein the wall members being of a rectangular shape having a height of h; the volume of the container being V_{container} = A_{bottom} x h; and wherein 0.75*d_{long} 5h ≤1.25*d_{long} and 0.50*d_{long}≤dₛₕₒᵣₜ≤d_{long}.

In an embodiment, the bottom member is of a rectangular shape and has a surface area of between 1.5 dm² and 3.5 dm², preferably between 1.7 dm² and 3.0 dm², more preferably between 2.0 dm² and 2.5 dm². In a further embodiment the height of the container is between 0.1 dm and 3.0 dm, preferably between 0.5 dm and 2.5 dm, more preferably between 1.0 dm and 2.0 dm. The container in this embodiment has an open top, which has a surface area of between 50% and 100%, preferably between 60% and 95%, more preferably between 70% and 90% of the surface area of the bottom member. An advantage of this embodiment is that the opening at the top is of a size that easily enables emptying a scoop filled with used cat litter Into the container. The opening also enables easy cleaning of the container.

In an embodiment, the container according to the present invention has smooth corners and edges, which means that the inner corners and inner edges have a radius of between 0.5 cm and 5 cm, preferably between 1.0 cm and 3 cm, most preferably between 1.5 cm and 2.5 cm.

An advantage of this embodiment is that such containers are easier to clean, due to the absence of perpendicular angles between the wall members and the bottom member. The risk of residual waste being stuck in the corners and edges of the container has significantly been reduced.

In an embodiment the container according to the present Invention further comprises a lid, In a further embodiment, the lid is of a rectangular shape having a size at least as large as the open top of the container, e.g. in case the open top has the same size as the bottom member, the lid may have a long edge with a length of at least d_{long} and a short edge with a length of at least dₛₕₒᵣₜ.

An advantage of the lid is that odors are prevented to be released from the container.

In an embodiment the lid of the container according to the present invention may be operatively connected to the at least one wall member, in a further embodiment the container further comprises a means for opening the lid. In a further embodiment, the means for opening the lid may be arranged near the handle, such that the container can be held and opened using one hand. This embodiment has an ergonomical advantage: the container can be held and easily opened using only one hand.

In an embodiment, the lid is operatively connected to the at least one wall member at which the handle is also arranged and operatively connected, such that the lid opens towards a user holding the container.

In an embodiment, the lid comprises a scoop for scooping pet litter from a pet litter box. The scoop may seal the container.

In an embodiment, the container according to the present invention further comprises a means for storing a scoop, such that the container and scoop are connected to each other. In a further embodiment, the means for storing a scoop comprises an additional compartment arranged beneath the bottom, sideways along a wall member, the compartment has at least one opening for storing a scoop. In another embodiment, the operatively connected lid comprises a means for storing a scoop.

The present invention also relates to an assembly comprising a container according to the present Invention and a scoop, The scoop comprises a scoop handle, and a part for scooping dally waste from a pet litter box, the compartment of the container being arranged for storing the scoop when it is not used.

In an embodiment the part for scooping comprises holes for separating used pet litter and fresh pet litter. An advantage of this embodiment is that the scoop may be used to sieve the used pet litter, such that unused pet litter can be returned to the pet litter box. This saves the use of pet litter.

The present invention further relates to a method for cleaning a pet litter box comprising the steps of:
I) scooping daily waste from the pet litter box, by using a scoop, the scoop comprising a scoop handle and a part for scooping the daily waste, the part for scooping optionally having holes to allow unused pet litter to fall through;
II) putting the daily waste in a container for transporting pet litter from a pet litter box to a waste bin, the container comprising at least one wall member, a bottom member and a handle, the handle being arranged and operatively connected to the at least one wall member, the volume of the container being between 0.5 and 5 dm³
III) emptying the container into a waste bin.

The invention will now be further explained with reference to the following figures:
Figure 1: Schematic representation of a first embodiment of a container according to the present invention: 1A) front view; 1B) back view; 1C) side view; 1D) upper view 1E) radius of Inner corners and inner edges.
Figure 2: Schematic representation of a second embodiment of a container according to the present invention: 2A) upper view; 2B) rear view; 2C) front view; 2D) side view.
Figure 3: Schematic representation of a third embodiment of a container according to the present invention, wherein a scoop clips onto the open top of the container.
Figure 4: Schematic representation of a fourth embodiment of a container according to the present invention, wherein a scoop may be stored away in an additional compartment (4A and 4B).
Figure 5: Schematic representation of a fifth embodiment of a container according to the present Invention, wherein the container comprises a lid that is operatively connected to the container (5A) and opens towards the user by pressing a button (5B).
Figure 6: Schematic representation of the means for storing a scoop on the lid of a container shown in Figure 5: 6A) rear view; 6B) side view.
Figure 7: Schematic representation of method steps for cleaning a pet litter box.

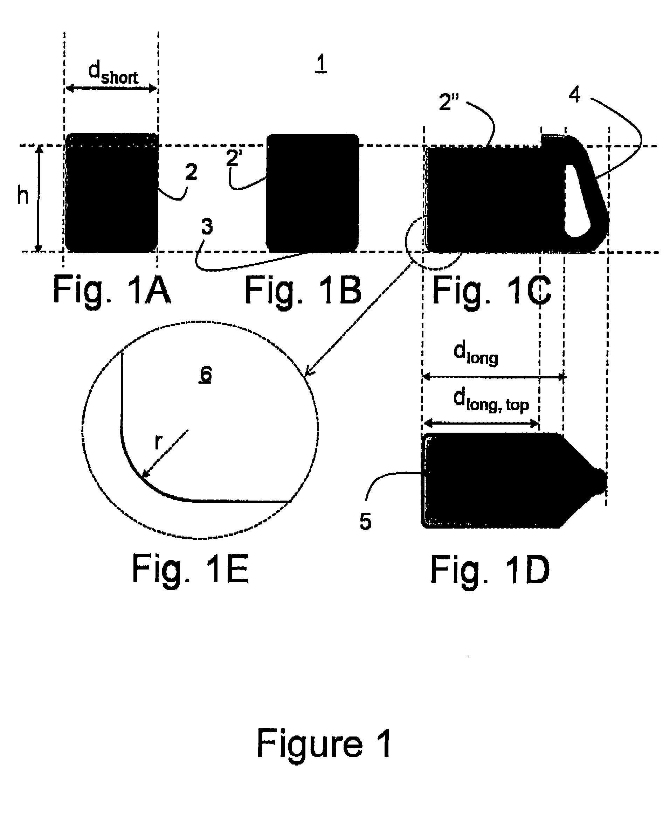

Figure 1 shows a schematic representation of a first embodiment of the present invention. It shows a container 1 having 4 wall members 2,2' and 2" (the wall member opposite and parallel to 2" is not shown), a bottom member 3, a handle 4 and an open top 5. The container has a height h, (Fig. 1A). The bottom member is rectangular and has a long side, with length d_{long} and a short side, with length dₛₕₒᵣₜ (Fig. 1A and Fig. 1 D). The surface area of the bottom member is calculated with the following formula A_{bottom}=d_{long} X dₛₕₒᵣₜ. The volume of the container is calculated with the following formula V_{container} = A_{bottom} x h. The dimensions of the container are already previously described and are not repeated here. Fig. 1 D shows that the container also has an open top 5, which has a surface area which in this embodiment is smaller than the surface area of the bottom member of the container: the open top has a long side which has a length of d_{long}, top and a short side with a length of d_{short,} which is equal to the length of the short side of the bottom member; Fig. 1C and 1D show that d_{long.top} < d_{long}, therefore the surface area of the open top (Aₜₒₚ) is smaller than the surface area of the bottom member. Fig. 1E shows that the inner edges and corners are smooth and have a radius r.

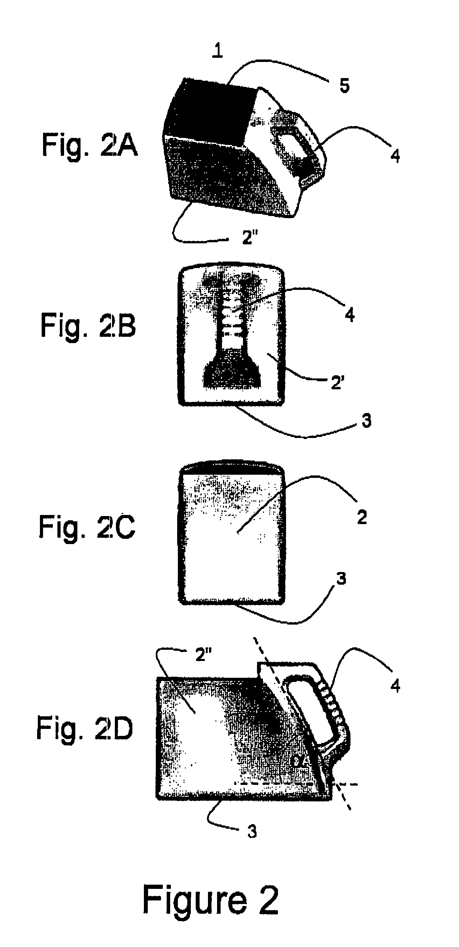

Figure 2 shows a schematic representation of a second embodiment. The numbers in Figure 2 correspond to the numbers in Figure 1 and are not further discussed. In this embodiment the handle is arranged at an angle α with the bottom member 3. α may be between 45° and 90°, preferably between 50° and 80°, most preferably between 55° and 75°. In the embodiment shown in Figure 2, α is about 60°.

The handle being arranged at an angle with the bottom member provides an ergonomic design of the container, because it provides an optimal alignment of the arm of a person holding the container.

An implication of this design of the container according to the present invention is that the surface area of the open top 5 is much smaller than the surface area of the bottom member 3, in case of the embodiment shown in Figure 2, the surface area of the open top is around 3/5 (i.e. 60%) of the surface area of the bottom member.

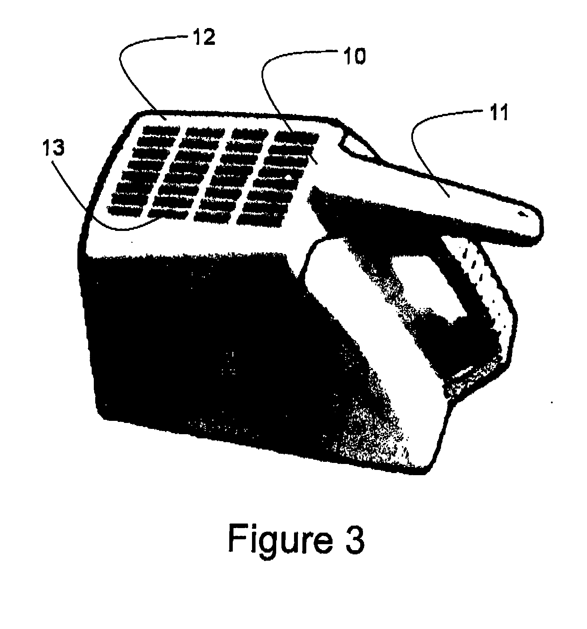

Figure 3 shows a schematic representation of a third embodiment of a container according to the present Invention, wherein a scoop 10 clips onto the open top (5 In Figures 1 and 2) of the container 1. The scoop 10 has a handle 11, a scooping part 12 which may have holes 13 for sieving purposes. In this particular example the holes have a rectangular shape, but they may have any desired shape. It is also possible that the scoop 10 has no holes at all in order to completely seal the container 1 with the scoop. The scoop 10 may be attached to the open top 5 in many ways, for example by clicking the scoop on top of the container 1.

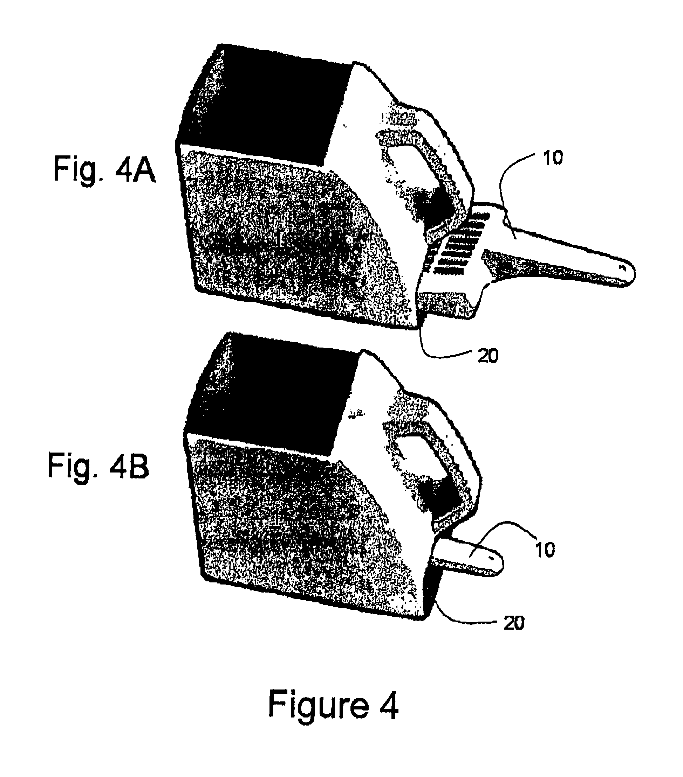

Figure 4 shows a schematic representation of a fourth embodiment of a container 1 according to the present invention. The container has an additional compartment 20, which in this particular example is located underneath the container and has an opening at the back (rear) side of the container. The scoop 10 can be stored in compartment 20 (see Fig 4A and 4B). There are several variations possible to this embodiment. For example the location of the opening of the additional compartment 20 may be located at the front side or at one of both long sides (see Figures 1 and 2). In a further embodiment, the scoop may be stored in an upward directed position in a compartment located at the front side (see Figure 2C), or at either one of the long sides (Figure 2D). These and other variations are considered to be part of this embodiment of the container according to the present invention.

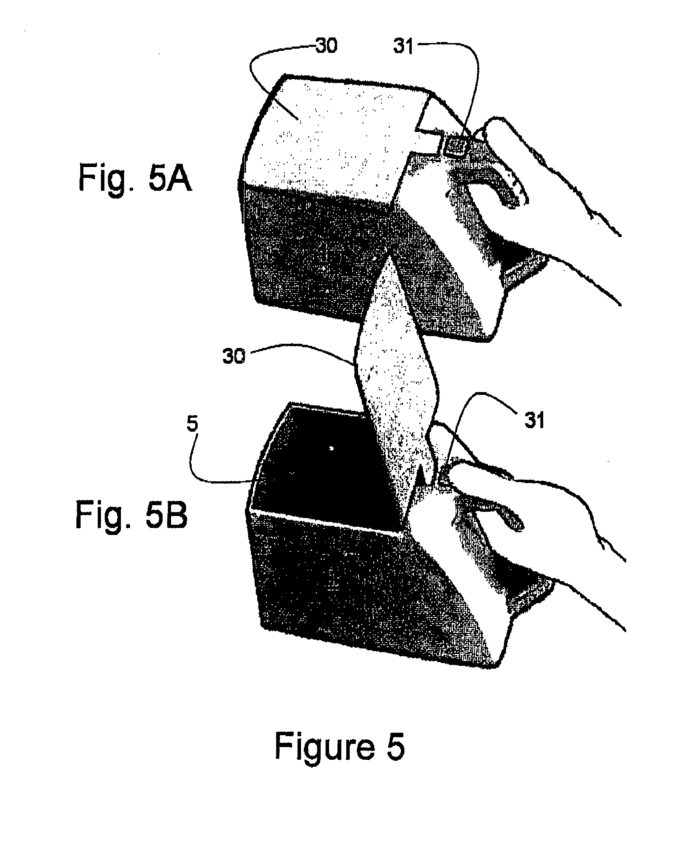

Figure 5 shows a schematic representation of a fifth embodiment of a container 1 according to the present invention, wherein the container comprises a lid 30 that is operatively connected to the container 1 (see Figure 5A) and opens towards the user by pressing button 31 (see Figure 5B).

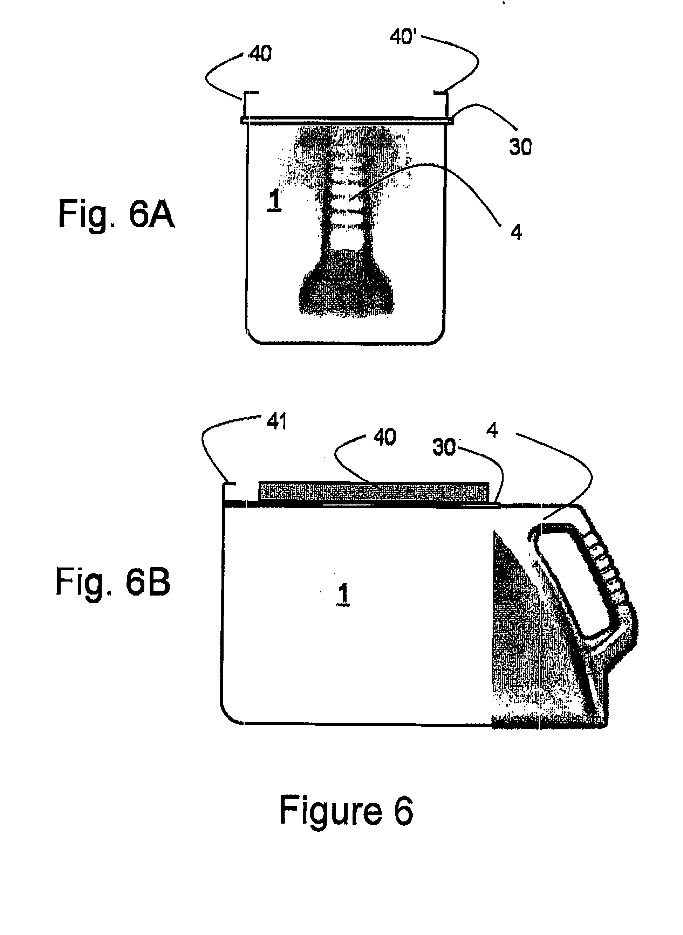

Figure 6 shows a schematic representation of the means for storing a scoop on the lid of a container shown in Figure 5. Fig. 6A shows a container 1 according to the present invention, comprising a handle 4 and a lid 30, the lid being operatively connected to the container as shown in Figure 5. On top of the lid 30 two L-shaped profiles are arranged 40, 40' to accommodate a scoop, which may be inserted between both profiles 40 and 40'. The scoop Is prevented from being slided entirely through the profiles 40 and 40' by L-shaped profile 41 (Figure 6B). The size of the scoop is such that it can be slided on top of the lid between the profiles 40 and 40' and that the short leg of the L is able to hold the scoop on top of the lid 30. Several variations based on the principle that the lid 30 comprises a means for storing a scoop are within the scope of this embodiment. For example a lid comprising a separate compartment on top of it for storing a scoop, the compartment being completely closed except for an opening for storing the scoop, analogous to the embodiment shown in Figure 4.

All features described here and shown in the Figures may be combined in any other way, It is clear that the described features may be combined in any other way, so that other combinations are considered to be embodiments of the present invention.

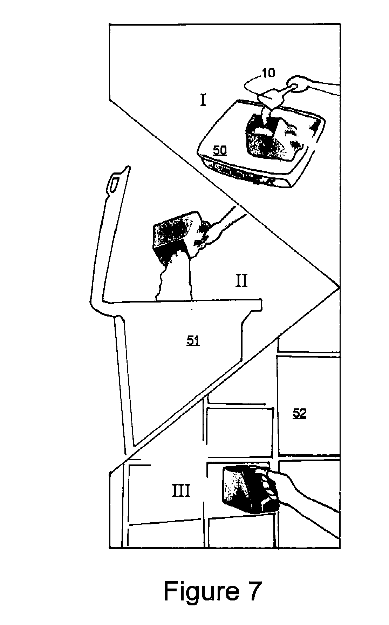

Figure 7 show a schematic representation of method steps for cleaning a pet litter box, which method comprises only three steps: I scooping dally waste with scoop 10 from pet litter box 50 into container 1 according to any embodiment of the present invention; II emptying the container 1 into a waste bin 51; III storing the container in a storing area 52, which might for example be a cupboard underneath a staircase. Of course the container 1 may be regularly cleaned with a disinfectant after using it and prior to storing it.

## Claims

1. Container (1) for transporting pet litter from a pet litter box (50) to a waste bin (51), the container comprising at least one wall member (2), a bottom member (3) and a handle (4), the handle being arranged and operatively connected to the at least one wall member, the volume of the container being between 0.5 and 5 dm³

2. Container (1) according to claim 1, comprising four wall members (2, 2', 2") connected to each other and to the bottom member (3); wherein the bottom member being of a rectangular shape having a long edge with length d_{long} and a short edge with length dₛₕₒᵣₜ ; the surface area of the bottom member being A_{bottom}=d_{long} x dₛₕₒᵣₜ; and wherein the wall members being of a rectangular shape having a height of h; the volume of the container being V_{container} = A_{bottom} x h; and wherein 0.75*d_{long} ≤h ≤1.25*d_{long} and 0.50*d_{long}≤dₛₕₒᵣₜ≤d_{long}.

3. Container (1) according to claim 2, wherein the bottom member (3) has a surface area of between 1.5 dm² and 3.5 dm² and a height of between 0.1 dm and 3.0 dm.

4. Container (1) according to any one of the previous claims comprising an open top (5) having a surface area of between 50% and 100% of the surface area of the bottom member (3)

5. Container (1) according to any one of the previous claims, wherein the container (1) has inner corners and inner edges (6) having a radius of between 0.5 and 5 cm.

6. Container (1) according to any one of the previous claims, further comprising a lid (30).

7. Container (1) according to claim6, wherein the lid (30) is operatively connected to the at least one wall member.

8. Container (1) according to any one of claims 6 and 7, wherein the container further comprises a means for opening the lid (31).

9. Container (1) according to claim 8, wherein the means for opening the lid (31) is arranged near the handle (4), such that the container (1) can be held and opened using one hand.

10. Container (1) according to any one of claims 7 to 9, wherein the lid (30) is operatively connected to the at least one wall member (2') at which the handle (4) is also arranged and operatively connected, such that the lld (30) opens towards a user holding the container (1).

11. Container (1) according to claim 6, wherein the lid (30) comprises a scoop (10) for scooping pet litter from a pet litter box (50).

12. Container (1) according to any one of the previous claims, the container (1) further comprising a means for storing a scoop (10)

13. Assembly comprising a container (1) according claim 12 and a scoop (10), the scoop comprising a scoop handle (11), and a part for scooping (12) daily waste from a pet litter box (50), the means for storing a scoop (10) being a compartment (20) being arranged for storing the scoop when it is not used.

14. Assembly according to claim 13, wherein, the part for scooping (12) comprises holes (13) for separating used pet litter and fresh pet litter.

15. Method for cleaning a pet litter box (50) comprising the steps of:
I) scooping daily waste from the pet lifter box (50), by using a scoop (10), the scoop (10) comprising a scoop handle (11) and a part for scooping (12) the daily waste, the part for scooping (12) optionally having holes (13) to allow unused pet litter to fall through;
II) putting the dally waste in a container (1) for transporting pet litter from a pet litter box (50) to a waste bin (51), the container (1) comprising at least one wall member (2), a bottom member (3) and a handle (4), the handle being arranged and operatively connected to the at least one wall member (2), the volume of the container being between 0.5 and 5 dm³
c) emptying the container (1) into a waste bin (51).
